# FASCICULE DE BREVET EUROPEEN

(11) **EP 3 782 265 B1**
(45) Date de publication et mention de la délivrance du brevet: **12.06.2024**
(21) Numéro de dépôt: 19715128.5
(22) Date de dépôt: 09.04.2019
(51) Int. Cl.: H02K 9/19

(54) **MACHINE ELECTRIQUE DE VEHICULE COMPRENANT UN DISPOSITIF DE REFROIDISSEMENT**
ELEKTRISCHE MASCHINE FÜR EIN FAHRZEUG MIT EINER KÜHLVORRICHTUNG
ELECTRIC MACHINE FOR A VEHICLE COMPRISING A COOLING DEVICE

(30) Priorité: 20.04.2018 FR 1853522
(43) Date de publication de la demande: 24.02.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: DUMAS, Eric, 78800 HOUILLES (FR); PARIS, François, 76920 Amfreville la mivoie (FR)
(74) Mandataire: Renault Group
(86) Numéro de dépôt international: PCT/EP2019/058923
(87) Numéro de publication internationale: WO 2019/201667

(56) Documents cités:
- EP-A1- 2 533 621
- WO-A1-2017/142457
- CA-A1- 2 116 900
- FR-A1- 2 260 890
- US-A- 6 065 297

## Description

La présente invention concerne le domaine des dispositifs de refroidissement de machines électriques, et plus particulièrement de machines électriques destinées à équiper des moyens de transport terrestres, marins ou aériens.

Les véhicules automobiles à propulsion électrique ou hybride électrique comprennent de manière classique un groupe motopropulseur équipé d'une machine électrique. La machine électrique est généralement refroidie par un dispositif de refroidissement comprenant un circuit et un réservoir, également appelé bâche. Le réservoir est situé en dessous de la machine électrique. Le circuit est alimenté en fluide par le réservoir et comprend des portions en connexion thermique avec le stator et/ou le rotor de la machine électrique.

Un tel agencement permet le refroidissement de la machine électrique mais n'apporte pas pleine satisfaction. D'une part, le dispositif de refroidissement prend une place importante dans l'espace limité du compartiment moteur. D'autre part, en cas de forte inclinaison du véhicule ou de fort dévers de la chaussée, il peut se produire un désamorçage d'une pompe de circulation du fluide hydraulique interrompant le refroidissement de la machine électrique.

Le document US6065297 divulgue une machine frigorifique comprenant un moteur entraînant un compresseur. Le moteur comporte un carter, un stator et un rotor. Un circuit de refroidissement du moteur comporte un passage annulaire autour du stator. Ce passage communique avec des évidements permettant d'arroser d'huile le rotor et les extrémités longitudinales du stator.

Le document CA2116900 divulgue un moteur électrique refroidi par huile. Un circuit d'huile entoure le stator et vient pulvériser de l'huile sur les chignons statoriques, notamment depuis un espace aménagé entre le stator et le carter du moteur.

Le document FR2260890 décrit une machine électrique refroidie par un circuit d'air et un circuit d'eau. Le circuit d'eau comporte un bac et une pompe alimentant des pulvérisateurs situés en face des chignons statoriques.

Le document EP2533621 décrit un système de refroidissement d'une installation électrique sous-marine. L'installation électrique comporte une enceinte et un équipement électrique. Un circuit principal, une pompe et un clapet anti-retour font circuler de l'eau déionisée pour refroidir l'équipement électrique.

Le document WO2017142457 décrit une machine électrique comportant un carter, un stator et un rotor. Un canal d'huile s'étend axialement en partie haute entre le carter et un manchon du stator, la partie basse du carter et du stator baigne dans l'huile.

Au vu de ce qui précède, l'invention a pour but de permettre le refroidissement d'une machine électrique en palliant les inconvénients précités.

Plus particulièrement, l'invention a pour but d'augmenter la compacité du dispositif de refroidissement tout en limitant sa sensibilité à une inclinaison du véhicule ou à un dévers de la chaussée.

A cet effet, il est proposé une machine électrique de véhicule automobile selon la revendication 1, comportant un dispositif de refroidissement, ledit dispositif comprenant un réservoir et un circuit en connexion fluidique avec le réservoir.

Selon une caractéristique générale de ce dispositif, le réservoir est destiné à être radialement situé entre un boîtier de la machine électrique et un stator de la machine électrique par rapport à un axe de la machine électrique, et sur toute la circonférence autour de l'axe de la machine électrique.

Une telle disposition du réservoir permet d'augmenter la compacité du dispositif de refroidissement en limitant notamment un décalage vertical entre l'axe de la machine électrique et une partie basse du réservoir et en utilisant un espace situé au-dessus et sur le côté du stator pour le réservoir. En outre, le fluide hydraulique contenu à haute pression dans le réservoir contribue au refroidissement du stator de la machine électrique.

Selon l'invention, le circuit comprend un premier compartiment périphérique axialement décalé par rapport au réservoir.

En limitant le décalage vertical entre l'axe de la machine électrique et une partie basse du réservoir et en compartimentant ainsi le dispositif de refroidissement, on limite une dispersion du fluide en cas d'inclinaison du dispositif. Ce faisant, on limite la sensibilité du dispositif de refroidissement à des fortes inclinaisons du véhicule ou des forts dévers de la chaussée.

On peut en outre prévoir un premier moyen d'étanchéité annulaire perpendiculaire à l'axe de la machine électrique, le premier moyen d'étanchéité étant axialement intercalé entre le réservoir et le premier compartiment périphérique.

Dans un mode de réalisation, le circuit comprend un canal en connexion fluidique avec le réservoir et un moyen de pulvérisation raccordé au canal et débouchant dans le premier compartiment périphérique, le moyen de pulvérisation étant destiné à être disposé axialement en regard d'un bobinage de rotor de la machine électrique.

La disposition du réservoir entre le boîtier et le stator permet de refroidir le stator et dispense donc de prévoir un moyen de pulvérisation agencé pour refroidir le stator. En disposant axialement le moyen de pulvérisation en regard d'un bobinage de rotor, on refroidit le rotor de manière plus efficace tout en améliorant la compacité et en diminuant le coût de réalisation du dispositif.

Selon l'invention, le circuit comprend un second compartiment périphérique, le réservoir étant axialement intercalé entre le premier compartiment périphérique et le second compartiment périphérique, le dispositif comportant un second moyen d'étanchéité annulaire perpendiculaire à l'axe de la machine électrique, le second moyen d'étanchéité étant axialement intercalé entre le réservoir et le second compartiment périphérique.

Diverses constructions peuvent être envisagées pour le circuit en aval des compartiments périphériques et en amont du réservoir. Parmi ces constructions, on peut notamment envisager les variantes suivantes, données à titre d'exemples non limitatifs.

Selon l'invention, le circuit comprend une pompe, un conduit de sortie et un conduit d'injection raccordant la pompe avec le réservoir, le conduit de sortie comprenant une première portion amont en connexion fluidique avec le premier compartiment périphérique, une seconde portion amont en connexion fluidique avec le second compartiment périphérique et une portion aval raccordant la première portion amont, la seconde portion amont et la pompe.

Cette solution permet d'améliorer particulièrement la compacité du dispositif par l'utilisation d'une seule pompe.

Selon une variante, le circuit comprend une première pompe, un premier conduit de sortie en connexion fluidique avec le premier compartiment périphérique, une seconde pompe, un second conduit de sortie en connexion fluidique avec le second compartiment périphérique et un conduit d'injection comprenant une première portion amont, une seconde portion amont et une portion aval raccordant la première portion amont, la seconde portion amont et le réservoir, la première pompe raccordant le premier conduit de sortie avec la première portion amont, la seconde pompe raccordant le second conduit de sortie avec la seconde portion amont.

Cette variante permet de minimiser le risque de désamorçage des pompes. Cette variante est donc tout particulièrement adaptée à des applications exigeantes, comme pour des machines électriques de traction d'un véhicule tout-terrain ou des machines électriques embarquées dans des aéronefs.

Dans un mode de réalisation, le circuit comprend un clapet antiretour disposé sur un conduit de sortie.

On limite de la sorte le risque de désamorçage d'une pompe lors d'une forte inclinaison du véhicule.

Selon l'invention, le circuit comprend un conduit d'équilibrage en connexion fluidique avec le premier compartiment périphérique et avec le second compartiment périphérique, le conduit d'équilibrage comprenant un ajutage et une bille disposée dans l'ajutage.

Le conduit d'équilibrage permet, en cas d'apparition d'un déséquilibre des niveaux de fluide hydraulique dans les compartiments périphériques, par exemple suite à une forte inclinaison, de rétablir l'équilibre entre les niveaux de fluide hydraulique.

Dans un mode de réalisation, le dispositif comprend un moyen de gestion de la température d'un fluide hydraulique contenu dans le réservoir, le moyen de gestion étant apte à piloter une alimentation du stator de la machine électrique.

Un tel moyen de gestion permet de contrôler la température du fluide hydraulique sans devoir incorporer un moyen de chauffage du fluide de manière à optimiser de manière simple le refroidissement mis en oeuvre par le dispositif.

Selon un autre aspect, il est proposé une machine électrique pour véhicule automobile, de préférence pour groupe motopropulseur de véhicule automobile à propulsion électrique ou hybride, comprenant un boîtier, un stator et un dispositif tel que défini précédemment.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en perspective d'une machine électrique selon un aspect de l'invention,
- la figure 2 est une vue en coupe longitudinale de la machine électrique de la figure 1,
- la figure 3 représente schématiquement un dispositif de refroidissement selon un mode de réalisation de l'invention, et
- la figure 4 représente schématiquement un dispositif de refroidissement selon un autre mode de réalisation de l'invention.

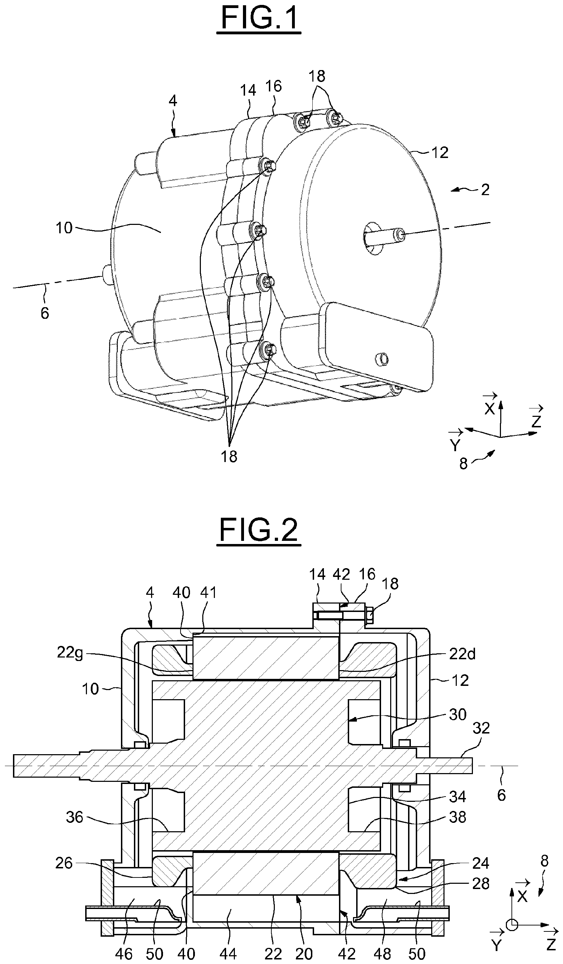

En référence aux figures 1 et 2, on a schématiquement représenté une machine électrique 2. Dans l'exemple illustré, la machine électrique 2 est destinée à être incorporée dans un groupe motopropulseur de véhicule automobile (non représenté) à propulsion électrique ou hybride électrique. Toutefois, on ne sort bien entendu pas du cadre de l'invention en incorporant la machine électrique 2 dans un autre dispositif, par exemple un moyen de transport aérien tel qu'un aéronef.

La machine électrique 2 comprend notamment un boîtier 4 axisymétrique autour d'un axe de symétrie 6. On définit une base vectorielle orthonormale directe 8 attachée au boîtier 4. La base 8 est constituée d'un vecteur *̅x̅*̅, d'un vecteur *̅y̅*̅ et d'un vecteur *̅z̅*̅. Le vecteur *̅z̅*̅ est parallèle à l'axe 6.

Dans la présente demande, sauf indication contraire, les termes « axial », « axialement », « radial », « radialement » et « circonférence » seront compris comme se rapportant à l'axe 6. Par ailleurs, le terme « cylindrique » sera compris selon sa définition classique, à savoir qu'une surface cylindrique est une surface constituée par les droites de direction donnée qui rencontrent une courbe donnée.

Le boîtier 4 comprend une première portion de boîtier 10 et une deuxième portion de boîtier 12. Une collerette radiale externe 14 s'étend à une extrémité axiale du boîtier 10. Une collerette radiale externe 16, de forme correspondant à la forme de la collerette 14, s'étend à une extrémité axiale de la portion 12. Les portions 10 et 12 sont en contact axial l'une avec l'autre notamment par les collerettes 14 et 16. Les portions 10 et 12 sont fixées par une pluralité de tiges filetées 18. En l'espèce, onze tiges filetées 18 fixent les portions 10 et 12.

La machine électrique 2 comporte un stator 20 disposé à l'intérieur du boîtier 4. Le stator 20 est cylindrique autour de la direction du vecteur *̅z̅*̅. Le stator 20 comprend notamment un corps 22 et un bobinage 24. Le corps 22 est cylindrique à section axiale circulaire autour de l'axe 6. Comme représenté sur la figure 2, le bobinage 24 comprend notamment un chignon gauche 26 et un chignon droit 28 situés axialement de part et d'autre du corps de stator 22. Le corps de stator 22 et le chignon 26 sont reçus à l'intérieur de la portion 10. Le chignon 28 s'étend axialement à l'extérieur de la portion 10 et est reçu à l'intérieur de la portion 12.

La machine électrique 2 comporte un rotor 30. Le rotor 30 est cylindrique autour de la direction du vecteur *̅z̅*̅. Le rotor 30 comporte un arbre 32 et un corps 34. L'arbre 32 est monté rotatif autour de l'axe 6 par rapport au boîtier 4. Le corps 34 est radialement délimité par une surface cylindrique extérieure (non référencée) à section axiale circulaire autour de l'axe 6. Le corps 34 reçoit un bobinage comprenant notamment un chignon gauche 36 et un chignon droit 38.

La machine électrique 2 comporte un cordon de silicone 40. Le cordon 40 est posé sur une surface frontale axiale 41 de la portion 10. La surface 41 est en contact axial via le cordon 40 avec une surface frontale 22g axiale du corps 22. Le cordon 40 forme une boucle continue sur la circonférence de la surface 41. Plus précisément, le cordon 40 forme un anneau dans le plan perpendiculaire au vecteur *̅z̅*̅. Dans l'exemple illustré, l'anneau formé par le cordon 41 est principalement circulaire avec quatre élargissements radiaux locaux.

La machine électrique 2 comporte un joint annulaire 42. Le joint 42 est sensiblement plan. Le joint 42 est axialement intercalé entre les collerettes 14 et 16. Le joint 42 comprend une extrémité radiale interne (non référencée) en contact axial avec une surface frontale axiale 22d du corps 22. Dans l'exemple illustré, le joint 42 est constitué d'une rondelle métallique. Toutefois, on peut envisager sans sortir du cadre de l'invention un joint 42 constitué par une rondelle en un autre matériau, par exemple en caoutchouc, ou par deux rondelles en deux matériaux différents juxtaposées l'une par rapport à l'autre, par exemple une rondelle métallique juxtaposée avec une rondelle en caoutchouc.

Le cordon 40 et le joint 42 forment ainsi des moyens d'étanchéité situés axialement de part et d'autre du corps 22. Grâce à ces moyens d'étanchéité, l'intérieur du boîtier 4 est compartimenté entre un réservoir 44, un premier compartiment périphérique 46 et un second compartiment périphérique 48. Le réservoir 44 est axialement intercalé entre les compartiments 46 et 48. Le réservoir 44 s'étend sur toute la circonférence autour de l'axe 6, en d'autres termes, le réservoir 44 entoure intégralement l'axe 6 et le stator 20. Le réservoir 44 est délimité de manière étanche par rapport au compartiment 46 par le cordon 40. De même, le réservoir 44 est séparé de manière étanche du compartiment 48 par le joint 42. Bien entendu, il est possible sans sortir du cadre de l'invention d'intervertir les moyens d'étanchéité 40 et 42, c'est-à-dire d'utiliser un joint à la place du cordon 40 et/ou d'utiliser un cordon de silicone en remplacement du joint 42.

Les compartiments 46 et 48 comportent chacun une crépine 50 dans leur portion inférieure. Les crépines 50 sont capables de collecter un fluide hydraulique contenu dans les compartiments 46 et 48. Plus précisément, les crépines 50 se trouvent au contact d'une nappe de fluide hydraulique formée dans le fond des compartiments 46 et 48 et peuvent, de ce fait, recueillir du fluide hydraulique issu de ces nappes.

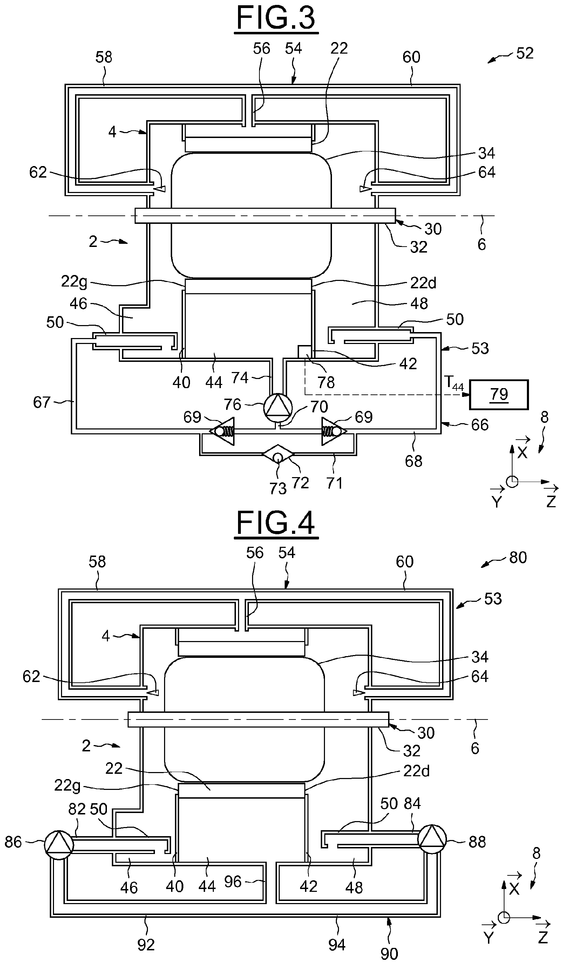

En référence à la figure 3, la machine électrique 2 comporte un dispositif de refroidissement 52. Dans un souci de clarté des figures, la machine électrique 2 a été représentée de manière schématique sur la figure 3, certains éléments de la machine électrique 2 ayant volontairement été omis. De même, le dispositif 52 a été omis sur les figures 1 et 2 pour une meilleure clarté de ces figures. Le dispositif 52 comporte notamment le réservoir 44 et un circuit 53 qui comporte notamment les compartiments 46 et 48 respectivement délimités de manière étanche par les moyens d'étanchéité 40 et 42. Le réservoir 44 et le circuit 53 échangent un fluide hydraulique pouvant notamment comprendre de l'huile.

Le circuit 53 comprend un canal à haute pression 54 ayant pour fonction de distribuer le fluide hydraulique contenu dans le réservoir 44 aux compartiments périphériques 46 et 48. Le canal 54 comprend une portion amont 56 en connexion fluidique avec le réservoir 44. Le canal 54 comprend une première portion aval 58 et une seconde portion aval 60. Les portions 58 et 60 sont en connexion fluidique avec la portion 56. Chaque portion 58, 60 comprend respectivement un gicleur 62, 64. Le gicleur 62 débouche dans le compartiment 46. Le gicleur 64 débouche dans le compartiment 48. Plus précisément, chaque gicleur 62, 64 est respectivement axialement disposé en regard du chignon 36, 38. Bien que des gicleurs soient utilisés pour pulvériser le fluide hydraulique, il peut bien entendu être utilisé un autre moyen de dispersion ou un autre moyen de pulvérisation.

Le circuit 53 comporte un conduit de sortie 66. Le conduit 66 comporte une première portion amont 67 en connexion fluidique avec la crépine 50 du compartiment 46 et une deuxième portion amont 68 raccordée avec la crépine 50 du compartiment 48. Chaque portion 67, 68 comporte un clapet antiretour 69 bloquant le flux en direction de la crépine 50 associée. Le conduit 66 comporte une portion aval 70 en connexion fluidique avec les portions 67 et 68.

Le circuit 53 comporte un conduit d'équilibrage 71 reliant les portions 67 et 68. Plus précisément, le point de raccordement du conduit 71 sur chaque portion 67, 68 est en amont du clapet antiretour 69 associé. Le conduit 71 comprend un ajutage 72 avec une bille d'équilibrage 73. De la sorte, le conduit 71 est obturé par la bille 73 si le véhicule est incliné. Si le véhicule est à plat, la bille 73 est déplacée au milieu de l'ajutage 72 et du fluide hydraulique peut s'écouler dans le conduit 71 pour rétablir un équilibre entre le niveau de fluide hydraulique dans le compartiment 46 et le niveau de fluide hydraulique dans le compartiment 48. Bien que, dans l'exemple illustré, il soit utilisé un ajutage et une bille pour réaliser le conduit d'équilibrage 71, on peut bien entendu envisager tout autre moyen pour réaliser l'ouverture et la fermeture de l'écoulement de fluide dans le conduit 71 en fonction d'une inclinaison du véhicule.

Le circuit 53 comporte un conduit d'injection à haute pression 74. Le conduit 74 est en connexion fluidique avec le réservoir 44. Le circuit 53 comprend en outre une pompe 76 raccordant la portion 70 avec le conduit 74.

Le dispositif 52 comporte un capteur de température 78 à l'intérieur du réservoir 44. Grâce au capteur 78, la température T₄₄ du fluide hydraulique contenu dans le réservoir 44 peut être mesurée. Il peut toutefois être envisagé d'utiliser d'autres moyens pour déterminer la température T₄₄, par exemple un estimateur fondé sur une cartographie.

Le dispositif 52 comporte un module de pilotage 79 en liaison d'informations avec le capteur 78 et un dispositif de contrôle (non représenté) de la machine électrique 2. Le module 79 est doté des moyens matériels et logiciels pour établir une consigne d'intensité d'alimentation du stator 20. En fait, le module 79 est configuré pour suivre une consigne d'intensité d'alimentation lorsque la température T₄₄ est inférieure à une valeur seuil T_{44_seuil_inf}, et pour diminuer l'intensité d'alimentation du stator 20 lorsque la température T₄₄ est supérieure à une valeur seuil T_{44_seuil_sup}. Il est ainsi fourni un moyen pour gérer la température T₄₄.

Grâce à cet agencement, la pompe 76 génère un flux dans le réservoir 44. Le fluide hydraulique contenu à haute pression dans le réservoir 44 refroidit le stator 20 de la machine électrique 2. Ce faisant, on peut piloter la température T₄₄ en modifiant l'intensité d'alimentation du stator 20 au moyen du module de pilotage 79. Le fluide hydraulique à haute pression est dirigé par le canal 54 vers les gicleurs 62 et 64. Le gicleur 62 pulvérise le fluide hydraulique dans le compartiment 46 pour refroidir le rotor 30 au niveau du chignon 36. De même, le gicleur 64 pulvérise le fluide hydraulique contre le chignon 38 dans le compartiment 48. Le fluide hydraulique pulvérisé s'accumule ensuite dans le fond des compartiments 46 et 48 de sorte à former une nappe au voisinage des crépines 50. La pompe 76 aspire le fluide hydraulique qui est alors réintroduit sous pression dans le réservoir 44.

En référence à la figure 4, on a schématiquement représenté un autre mode de réalisation de dispositif de refroidissement 80 destiné à être incorporé dans la machine électrique 2. Les éléments identiques portent les mêmes références.

Le dispositif de refroidissement 80 selon le mode de réalisation de la figure 4 diffère du dispositif 52 en ce qu'il comporte un premier conduit de sortie 82 et un second conduit de sortie 84 à la place du conduit 66. Le conduit 82 est raccordé à la crépine 50 du compartiment 46. Le conduit 84 est raccordé à la crépine 50 du compartiment 48. Le dispositif 80 comporte une première pompe 86 et une seconde pompe 88 montées respectivement sur le conduit 82 et le conduit 84.

Le dispositif 80 comporte un conduit d'injection 90. Le conduit 90 comporte une première portion amont 92 raccordée à la pompe 86 et une seconde portion amont 94 raccordée à la pompe 88. Le conduit 90 comprend une portion aval 96 en connexion fluidique avec le réservoir 44 et les portions 92 et 94.

Par cet agencement, les pompes 86 et 88 génèrent un flux de fluide hydraulique à haute pression dans le réservoir 44. Ce fluide est dirigé par le canal 54 dans les compartiments 46 et 48. De cette manière, le fluide hydraulique refroidit le stator 20 et le rotor 30 comme dans le mode de réalisation de la figure 3. Ensuite, le fluide contenu dans le compartiment 46 est collecté par la crépine 50 associée au conduit 82 par aspiration par la pompe 86. De même, le fluide contenu dans le compartiment 48 est aspiré par la pompe 88 via le conduit 84 et la crépine 50 associée. Le fluide aspiré par la pompe 86 d'une part, et par la pompe 88 d'autre part, suivent respectivement les portions 92 et 94 pour rejoindre le réservoir 44 via la portion 96.

Ce mode de réalisation permet donc de mettre en oeuvre le même refroidissement que le mode de réalisation de la figure 3 en limitant au maximum le risque de désamorçage d'une pompe de circulation du fluide hydraulique. Le dispositif 80 est donc particulièrement adapté à des machines électriques destinées à des applications particulièrement exigeantes, telles que des machines électriques destinées à être incorporées dans le groupe motopropulseur de véhicules tout-terrain ou dans un aéronef.

Dans l'exemple illustré, le dispositif 80 est dépourvu de clapet antiretour et de conduit d'équilibrage. Il est toutefois possible, pour limiter au maximum le risque de désamorçage d'une pompe et le risque de déséquilibre des niveaux de fluide hydraulique, d'ajouter des clapets antiretour sur les conduits 82 et 84 et/ou un conduit d'équilibrage raccordant les conduits 82 et 84. De même, le module de pilotage 79 et le capteur 78 peuvent bien entendu être incorporés dans le dispositif 80 sans sortir du cadre de l'invention.

Au vu de ce qui précède, la machine électrique 2 et les dispositifs de refroidissement 52 et 80 permettent, en intercalant radialement le réservoir 44 entre le boîtier 4 et le stator 20, de refroidir efficacement la machine électrique en augmentant la compacité et en limitant le risque de défaillance du refroidissement en cas de forte inclinaison du véhicule ou de fort dévers de la chaussée.

## Revendications

1. Machine électrique (2) de véhicule automobile comportant un dispositif de refroidissement (52, 80), ledit dispositif comprenant un réservoir (44) et un circuit (53) en connexion fluidique avec le réservoir (44), le réservoir (44) étant situé radialement entre un boîtier (4) de la machine électrique (2) et un stator (20) de la machine électrique (2) par rapport à un axe (6) de la machine électrique (2) et sur toute la circonférence autour de l'axe (6) de la machine électrique (2), le circuit (53) comprenant un premier compartiment périphérique (46) et un deuxième compartiment périphérique (48) comportant respectivement un chignon statorique (26,28) le réservoir (44) étant axialement intercalé entre le premier compartiment périphérique (46, 48) et le second compartiment périphérique (48, 46), **caractérisée en ce que** le dispositif (52, 80) comprend :
- un premier moyen d'étanchéité (40) annulaire perpendiculaire à l'axe (6) de la machine électrique (2), le premier moyen d'étanchéité (40) étant axialement intercalé entre le réservoir (44) et le premier compartiment périphérique (46) et délimitant le réservoir (44) et le premier compartiment périphérique (46) de manière étanche, le premier moyen d'étanchéité (40) étant en contact avec une surface frontale (22g) du corps (22) du stator (20),
- un second moyen d'étanchéité (42) annulaire perpendiculaire à l'axe (6) de la machine électrique (2), le second moyen d'étanchéité (42) étant axialement intercalé entre le réservoir (44) et le second compartiment périphérique (48),
le circuit (53) comprenant une pompe (76), un conduit de sortie (66) et un conduit d'injection (74) raccordant la pompe (76) avec le réservoir (44), le conduit de sortie (66) comprenant une première portion amont (67) en connexion fluidique avec le premier compartiment périphérique (46), une seconde portion amont (68) en connexion fluidique avec le second compartiment périphérique (48) et une portion aval (70) raccordant la première portion amont (67), la seconde portion amont (68) et la pompe (76),
le dispositif comprend un conduit d'équilibrage (71) de niveau fluidique en connexion fluidique avec le premier compartiment périphérique (46) et avec le second compartiment périphérique (48), le conduit d'équilibrage (71) comprenant un ajutage (72) et une bille (73) disposée dans l'ajutage.

2. Machine électrique (2) selon la revendication 1, dans laquelle le circuit (53) comprend un canal (54) en connexion fluidique avec le réservoir (44) et un moyen de pulvérisation (62, 64) raccordé au canal (54) et débouchant dans le premier compartiment périphérique (46, 48), le moyen de pulvérisation (62, 64) étant disposé axialement en regard d'un bobinage (24) de rotor (20) de la machine électrique (2).

3. Machine électrique (2) selon l'une quelconque des revendications 1 ou 2, dans laquelle le circuit (53) comprend un second compartiment périphérique (48, 46), le réservoir (44) étant axialement intercalé entre le premier compartiment périphérique (46, 48) et le second compartiment périphérique (48, 46), le dispositif (52, 80) comportant un second moyen d'étanchéité (42, 40) annulaire perpendiculaire à l'axe (6) de la machine électrique (2), le second moyen d'étanchéité (42, 40) étant axialement intercalé entre le réservoir (44) et le second compartiment périphérique (48, 46), le circuit (53) comprenant une première pompe (86), un premier conduit de sortie (82) en connexion fluidique avec le premier compartiment périphérique (46), une seconde pompe (88), un second conduit de sortie (84) en connexion fluidique avec le second compartiment périphérique (48) et un conduit d'injection (90) comprenant une première portion amont (92), une seconde portion amont (94) et une portion aval (96) raccordant la première portion amont (92), la seconde portion amont (94) et le réservoir (44), la première pompe (86) raccordant le premier conduit de sortie (82) avec la première portion amont (92), la seconde pompe (88) raccordant le second conduit de sortie (84) avec la seconde portion amont (94).

4. Machine électrique (2) selon la revendication 1 à 3, dans laquelle le circuit (53) comprend un clapet anti-retour (69) disposé sur un conduit de sortie (66, 82, 84).

5. Machine électrique (2) selon l'une quelconque des revendications 1 à 4, dans laquelle le dispositif comprend en outre un moyen de gestion de la température (T₄₄) d'un fluide hydraulique contenu dans le réservoir (44), le moyen de gestion étant apte à piloter une alimentation du stator (20) de la machine électrique (2).

## Patentansprüche

1. Elektrische Maschine (2) eines Kraftfahrzeugs, die eine Kühlvorrichtung (52, 80) umfasst, wobei die Vorrichtung einen Behälter (44) und einen Kreislauf (53) in Fluidverbindung mit dem Behälter (44) beinhaltet, wobei sich der Behälter (44) bezogen auf eine Achse (6) der elektrischen Maschine (2) radial zwischen einem Gehäuse (4) der elektrischen Maschine (2) und einem Stator (20) der elektrischen Maschine (2) und an dem gesamten Umfang um die Achse (6) der elektrischen Maschine (2) herum befindet, wobei der Kreislauf (53) eine erste periphere Kammer (46) und eine zweite periphere Kammer (48) beinhaltet, die jeweils einen Statorwickelkopf (26, 28) umfassen, wobei der Behälter (44) axial zwischen der ersten peripheren Kammer (46, 48) und der zweiten peripheren Kammer (48, 46) eingefügt ist, **dadurch gekennzeichnet, dass** die Vorrichtung (52, 80) Folgendes beinhaltet:
- ein erstes ringförmiges Dichtungsmittel (40), das zu der Achse (6) der elektrischen Maschine (2) senkrecht ist, wobei das erste Dichtungsmittel (40) axial zwischen dem Behälter (44) und der ersten peripheren Kammer (46) eingefügt ist und den Behälter (44) und die erste periphere Kammer (46) dichtend begrenzt, wobei das erste Dichtungsmittel (40) mit einer Stirnfläche (22g) des Körpers (22) des Stators (20) in Kontakt ist,
- ein zweites ringförmiges Dichtungsmittel (42), das zu der Achse (6) der elektrischen Maschine (2) senkrecht ist, wobei das zweite Dichtungsmittel (42) axial zwischen dem Behälter (44) und der zweiten peripheren Kammer (48) eingefügt ist,
wobei der Kreislauf (53) eine Pumpe (76), eine Austrittsleitung (66) und eine Einspritzleitung (74), die die Pumpe (76) mit dem Behälter (44) verbindet, beinhaltet, wobei die Austrittsleitung (66) einen ersten stromaufwärtigen Abschnitt (67) in Fluidverbindung mit der ersten peripheren Kammer (46), einen zweiten stromaufwärtigen Abschnitt (68) in Fluidverbindung mit der zweiten peripheren Kammer (48) und einen stromabwärtigen Abschnitt (70), der den ersten stromaufwärtigen Abschnitt (67), den zweiten stromaufwärtigen Abschnitt (68) und die Pumpe (76) verbindet, beinhaltet,
wobei die Vorrichtung eine Leitung (71) zum Ausgleichen des Fluidniveaus in Fluidverbindung mit der ersten peripheren Kammer (46) und mit der zweiten peripheren Kammer (48) beinhaltet, wobei die Ausgleichsleitung (71) einen Stutzen (72) und eine in dem Stutzen angeordnete Kugel (73) beinhaltet.

2. Elektrische Maschine (2) nach Anspruch 1, wobei der Kreislauf (53) einen Kanal (54) in Fluidverbindung mit dem Behälter (44) und ein Sprühmittel (62, 64), das mit dem Kanal (54) verbunden ist und in der ersten peripheren Kammer (46, 48) mündet, beinhaltet, wobei das Sprühmittel (62, 64) axial gegenüber einer Wicklung (24) eines Rotors (20) der elektrischen Maschine (2) angeordnet ist.

3. Elektrische Maschine (2) nach einem beliebigen der Ansprüche 1 oder 2, wobei der Kreislauf (53) eine zweite periphere Kammer (48, 46) beinhaltet, wobei der Behälter (44) axial zwischen der ersten peripheren Kammer (46, 48) und der zweiten peripheren Kammer (48, 46) eingefügt ist, wobei die Vorrichtung (52, 80) ein zweites ringförmiges Dichtungsmittel (42, 40) umfasst, das zu der Achse (6) der elektrischen Maschine (2) senkrecht ist, wobei das zweite Dichtungsmittel (42, 40) axial zwischen dem Behälter (44) und der zweiten peripheren Kammer (48, 46) eingefügt ist, wobei der Kreislauf (53) eine erste Pumpe (86), eine erste Austrittsleitung (82) in Fluidverbindung mit der ersten peripheren Kammer (46), eine zweite Pumpe (88), eine zweite Austrittsleitung (84) in Fluidverbindung mit der zweiten peripheren Kammer (48) und eine Einspritzleitung (90) beinhaltet, welche einen ersten stromaufwärtigen Abschnitt (92), einen zweiten stromaufwärtigen Abschnitt (94) und einen stromabwärtigen Abschnitt (96), der den ersten stromaufwärtigen Abschnitt (92), den zweiten stromaufwärtigen Abschnitt (94) und den Behälter (44) verbindet, beinhaltet, wobei die erste Pumpe (86) die erste Austrittsleitung (82) mit dem ersten stromaufwärtigen Abschnitt (92) verbindet, die zweite Pumpe (88) die zweite Austrittsleitung (84) mit dem zweiten stromaufwärtigen Abschnitt (94) verbindet.

4. Elektrische Maschine (2) nach Anspruch 1 bis 3, wobei der Kreislauf (53) eine Rückschlagklappe (69) beinhaltet, die in einer Austrittsleitung (66, 82, 84) angeordnet ist.

5. Elektrische Maschine (2) nach einem beliebigen der Ansprüche 1 bis 4, wobei die Vorrichtung ferner ein Mittel zur Verwaltung der Temperatur (T₄₄) eines in dem Behälter (44) enthaltenen Hydraulikfluids beinhaltet, wobei das Verwaltungsmittel dazu fähig ist, eine Stromversorgung des Stators (20) der elektrischen Maschine (2) zu steuern.

## Claims

1. Electric machine (2) of a motor vehicle, having a cooling device (52, 80), said device comprising a tank (44) and a circuit (53) in fluidic connection with the tank (44), the tank (44) being situated radially between a housing (4) of the electric machine (2) and a stator (20) of the electric machine (2) relative to an axis (6) of the electric machine (2) and over the entire circumference around the axis (6) of the electric machine (2), the circuit (53) comprising a first peripheral compartment (46) and a second peripheral compartment (48) respectively having a stator visible portion (26, 28), the tank (44) being axially interposed between the first peripheral compartment (46, 48) and the second peripheral compartment (48, 46), **characterized in that** the device (52, 80) comprises:
- a first annular sealing means (40) perpendicular to the axis (6) of the electric machine (2), the first sealing means (40) being axially interposed between the tank (44) and the first peripheral compartment (46) and delimiting the tank (44) and the first peripheral compartment (46) in a sealed manner, the first sealing means (40) being in contact with a frontal surface (22g) of the body (22) of the stator (20),
- a second annular sealing means (42) perpendicular to the axis (6) of the electric machine (2), the second sealing means (42) being axially interposed between the tank (44) and the second peripheral compartment (48),
the circuit (53) comprising a pump (76), an output duct (66) and an injection duct (74) connecting the pump (76) with the tank (44), the output duct (66) comprising a first upstream portion (67) in fluidic connection with the first peripheral compartment (46), a second upstream portion (68) in fluidic connection with the second peripheral compartment (48) and a downstream portion (70) connecting the first upstream portion (67), the second upstream portion (68) and the pump (76),
the device comprising a fluidic level equalizing duct (71) in fluidic connection with the first peripheral compartment (46) and with the second peripheral compartment (48), the equalizing duct (71) comprising a nozzle (72) and a ball (73) disposed in the nozzle.

2. Electric machine (2) according to Claim 1, wherein the circuit (53) comprises a channel (54) in fluidic connection with the tank (44) and a spraying means (62, 64) connected to the channel (54) and opening into the first peripheral compartment (46, 48), the spraying means (62, 64) being disposed axially facing a winding (24) of the rotor (20) of the electric machine (2).

3. Electric machine (2) according to either one of Claims 1 and 2, wherein the circuit (53) comprises a second peripheral compartment (48, 46), the tank (44) being axially interposed between the first peripheral compartment (46, 48) and the second peripheral compartment (48, 46), the device (52, 80) having a second annular sealing means (42, 40) perpendicular to the axis (6) of the electric machine (2), the second sealing means (42, 40) being axially interposed between the tank (44) and the second peripheral compartment (48, 46), the circuit (53) comprising a first pump (86), a first output duct (82) in fluidic connection with the first peripheral compartment (46), a second pump (88), a second output duct (84) in fluidic connection with the second peripheral compartment (48) and an injection duct (90) comprising a first upstream portion (92), a second upstream portion (94) and a downstream portion (96) connecting the first upstream portion (92), the second upstream portion (94) and the tank (44), the first pump (86) connecting the first output duct (82) with the first upstream portion (92), the second pump (88) connecting the second output duct (84) with the second upstream portion (94).

4. Electric machine (2) according to Claims 1 to 3, wherein the circuit (53) comprises a non-return valve (69) disposed on an output duct (66, 82, 84).

5. Electric machine (2) according to any one of Claims 1 to 4, wherein the device further comprises a means for managing the temperature (T₄₄) of a hydraulic fluid contained in the tank (44), the management means being able to drive a supply of the stator (20) of the electric machine (2).
